(19) Europäisches Patentamt
European Patent Office
Office européen des brevets

(11) EP 3 479 998 A1

(12) EUROPEAN PATENT APPLICATION
published in accordance with Art. 153(4) EPC

(43) Date of publication:
**08.05.2019 Bulletin 2019/19**

(21) Application number: **17819746.3**

(22) Date of filing: **30.05.2017**

(51) Int Cl.:
***B29C 64/20*** *(2017.01)* ***B29C 64/118*** *(2017.01)*
***B29C 64/259*** *(2017.01)* ***B33Y 70/00*** *(2015.01)*
***C08G 69/00*** *(2006.01)* ***C08L 77/00*** *(2006.01)*
***B29K 77/00*** *(2006.01)*

(86) International application number:
**PCT/JP2017/020137**

(87) International publication number:
**WO 2018/003379 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.07.2016 JP 2016131332**

(71) Applicant: **UBE Industries, Ltd.**
**Yamaguchi 755-8633 (JP)**

(72) Inventors:
- **HARA Yoshitomo**
**Ube-shi**
**Yamaguchi 755-8633 (JP)**
- **FUJIMURA Hideki**
**Ube-shi**
**Yamaguchi 755-8633 (JP)**
- **MATSUMOTO Tadaharu**
**Ube-shi**
**Yamaguchi 755-8633 (JP)**
- **TSURU Mao**
**Ube-shi**
**Yamaguchi 755-8633 (JP)**

(74) Representative: **Plougmann Vingtoft a/s**
**Strandvejen 70**
**2900 Hellerup (DK)**

(54) **HEAT-MELTING LAMINATION-TYPE MATERIAL FOR 3D PRINTER AND HEAT-MELTING LAMINATION-TYPE FILAMENT FOR 3D PRINTER USING SAME**

(57) The present invention provides a material for fused deposition modeling 3D printer having an improved formability, and a filament for fused deposition modeling 3D printer using the same. The material for fused deposition modeling 3D printer of the present invention comprises a polyamide copolymer. The filament for fused deposition modeling 3D printer of the present invention comprises the material for fused deposition modeling 3D printer as described above.

EP 3 479 998 A1

## Description

TECHNICAL FIELD

The present invention relates to a material for fused deposition modeling 3D printer and a filament for fused deposition modeling 3D printer using the same.

BACKGROUND ART

ABS or PLA are widely used as the melted resin for the material for fused deposition modeling 3D printer. However, both melted resins are required to be set the forming temperature at 240°C or more. If the forming temperature is more than 200°C, an advanced safety counterplan such as a heat resistant structure may be required, depending on the type of the fused deposition modeling 3D printer. On the other hand, if the resins are tried to be formed at a lower temperature such as 200°C or less, the formed article has poor adhesion between layers and has insufficient strength.

Therefore, materials for fused deposition modeling 3D printer have been developed by using other materials. Patent Document 1 describes a filament for three-dimensional printer which is composed of a polyester-based thermoplastic elastomer having certain properties. Patent Document 2 describes a filament composition for three-dimensional printer which contains an atactic polypropylene having certain properties.

PRIOR ART DOCUMENTS

PATENT DOCUMENTS

Patent Document 1: JP 2016-55637 A
Patent Document 2: JP 2016-88101 A

SUMMARY OF THE INVENTION

PROBLEM TO BE SOLVED BY THE INVENTION

For the formed article produced by the fused deposition modeling 3D printer, the good texture and the ease of postprocessing are required. Further, in the filament for fused deposition modeling 3D printer, there is a problem that monofilament cannot resist the repeated bending by repeatedly running the extrusion head at high speed during the formation and is cut down. Further, in some monofilaments of the thermoplastic resin, air bubbles are easily created and the variation in the discharge amount easily occur during storage.

Accordingly, an object of the present invention is to provide a material for fused deposition modeling 3D printer having an improved formability, and a filament for fused deposition modeling 3D printer using the same.

MEANS OF SOLVING THE PROBLEM

The present invention is as follows:

(1) A material for fused deposition modeling 3D printer, comprising a polyamide copolymer.
(2) The material for fused deposition modeling 3D printer according to (1), wherein the polyamide copolymer is a polyamide elastomer.
(3) The material for fused deposition modeling 3D printer according to (2), wherein the polyamide elastomer is a polyether polyamide elastomer.
(4) The material for fused deposition modeling 3D printer according to (3), wherein the polyether polyamide elastomer is obtained by polymerizing an amino carboxylic acid compound represented by the following formula (A1) and/or a lactam compound represented by the following formula (A2), a triblock polyether diamine compound represented by the following formula (B), and a dicarboxylic acid compound represented by the following formula (C).

$$H_2N\text{-}R^1\text{-}COOH \qquad (A1)$$

In the formula, $R^1$ represents a linking group containing a hydrocarbon chain.

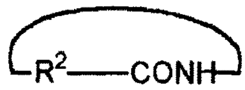 (A2)

In the formula, $R^2$ represents a linking group containing a hydrocarbon chain.

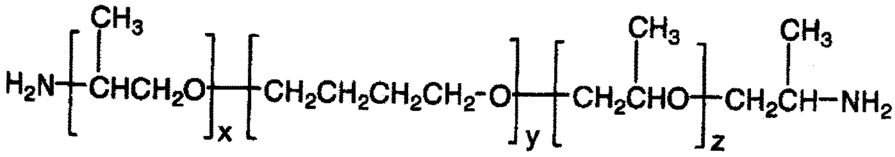 (B)

In the formula, x represents a number of 1 to 20, y represents a number of 4 to 50, and z represents a number of 1 to 20.

$$HOOC\text{-}(R^3)_m\text{-}COOH \qquad (c)$$

In the formula, $R^3$ represents a linking group containing a hydrocarbon chain, and m is 0 or 1.

(5) The material for fused deposition modeling 3D printer according to any one of (1) to (4), wherein the polyamide copolymer has a melting point of 200°C or less.

(6) The material for fused deposition modeling 3D printer according to any one of (1) to (5), wherein the polyamide copolymer has a melt flow rate of 10 g/10 min or more as measured by using a load of 5000 g at 200°C according to ISO 1133.

(7) The material for fused deposition modeling 3D printer according to any one of (1) to (6), wherein the polyamide copolymer has a bending elastic modulus of 1000 MPa or less as measured at 23°C and 50%RH according to ISO 178.

(8) A filament for fused deposition modeling 3D printer, comprising the material for fused deposition modeling 3D printer according to any one of (1) to (7).

(9) A winding body of the filament for fused deposition modeling 3D printer according to (8).

(10) A cartridge to be mounted to fused deposition modeling 3D printer, comprising the winding body according to (9) placed in the cartridge.

## EFFECT OF THE INVENTION

According to the present invention, a material for fused deposition modeling 3D printer having an improved formability, and a filament for fused deposition modeling 3D printer using the same can be provided.

## MODE FOR CARRYING OUT THE INVENTION

The material for fused deposition modeling 3D printer of the present invention contains a polyamide copolymer. The material for fused deposition modeling 3D printer of the present invention may contain the polyamide copolymer alone, or may be a composition which contains the polyamide copolymer and any other component without impairing the effect of the present invention. Examples of the other component include polymers other than the polyamide copolymer, heat resistant agents, ultraviolet absorbers, light stabilizers, antioxidants, antistatic agents, lubricants, slipping agents, nucleating agents, tackifiers, sealing modifiers, anti-fogging agents, mold release agents, plasticizers, pigments, dyes, perfumes, flame retardants, and reinforcing materials.

Specific examples of polymers other than the polyamide copolymer include acrylonitrile-butadiene-styrene resins (ABS resins), polylactic acids (PLA resins), polyurethane resins, polyolefin resins, polyester resins, homopolyamide resins, styrene resins, acrylic resins, polycarbonate resins, polyvinyl chloride resins, silicone resins, and rubbers.

Specific examples of the homopolyamide resin include polyamide 6, polyamide 11, polyamide 12, polyamide 66, polyamide 69, polyamide 610, polyamide 611, polyamide 612, polyamide 62, polyamide 92, polyamide 102, polyamide 122, polyamide IPD6, and polyamide MXD6.

Specific examples of the rubbers include butyl rubbers, chlorinated butyl rubbers, brominated butyl rubbers, isoprene rubbers, isobuthylene-bromoparamethylstyrene copolymers, ethylene-propylene copolymers (EPR), modified EPRs, ethylene-butene copolymers (EBR), modified EBRs, ethylene-ethyl acrylate copolymers (EEA), modified EEAs, ethylene-propylene-diene tri-block copolymers (EPDM), modified EPDMs, acrylonitrile butadiene rubbers (NBR), chloropropylene rubbers (CR), hydrogenated NBRs, acrylic rubbers, ethylene-acrylic rubbers (AEM), styrene-ethylene-butylene-styrene copolymers (modified SEBS), and blends of two or more rubbers as described above.

The polymer other than the polyamide copolymer is preferably a polyurethane resin, a polyolefin resin, a polyester resin, a homopolyamide resin, and a rubber in terms of the compatibility with the polyamide copolymer during

melt-kneading.

As the lubricant, particles are preferably added. Any particles can be added. Examples of the inorganic particles include silicas, aluminas, kaolins, titanium dioxide, calcium carbonate, magnesium carbonate, zinc carbonate, calcium stearate, magnesium stearate, and zinc stearate. Examples of the organic particles include acrylic resin particles, melamine resin particles, silicone resin particles, and polystyrene resin particles.

Examples of the reinforcing materials include inorganic fillers and inorganic fibers. Specific examples of the inorganic fillers include calcium carbonate, zinc carbonate, magnesium oxide, calcium silicate, sodium aluminate, calcium aluminate, sodium aluminosilicate, magnesium silicate, potassium titanate, glass balloons, glass flakes, glass powders, silicon carbide, silicon nitride, boron nitride, gypsums, calcined kaolins, zinc oxide, antimony trioxide, zeolites, hydrotalcites, wollastonites, silicas, talcs, metal powders, aluminas, graphites, carbon blacks, and carbon nanotubes. Specific examples of the inorganic fibers include glass cut fibers, glass milled fibers, glass fibers, gypsum whiskers, metal fibers, metal whiskers, ceramic whiskers, carbon fibers, and cellulose nanofibers.

The percentage of the polyamide copolymer contained in the material for fused deposition modeling 3D printer of the present invention is preferably 5 wt% or more, more preferably 30 wt% or more, further preferably 60 wt% or more, and particularly preferably 85 wt% or more. In terms of performing the effect of the present invention sufficiently, the polyamide copolymer is preferably contained as the main component, not as a modifier in the material for fused deposition modeling 3D printer of the present invention. The main component means preferably that the percentage of the polyamide copolymer is 50 wt% or more based on the total amount of materials for fused deposition modeling 3D printer, more preferably that it is 60 wt% or more, further preferably that it is 70 wt% or more, particularly preferably that it is 80 wt% or more, especially preferably that it is 90 wt% or more, and most preferably that it is 95 wt% or more. The percentage of the polyamide copolymer contained in the material for fused deposition modeling 3D printer of the present invention may be 100 wt%, 99 wt% or less, or 95 wt% or less.

The melting point of the polyamide copolymer is preferably 200°C or less. If the melting point is 200°C or less, the temperature for the formation by the fused deposition modeling 3D printer can be set lower, and an advanced safety counterplan is not required. In addition, the power consumption can be saved, and the running cost can be decreased. The melting point of the polyamide copolymer is more preferably 190°C or less, further preferably 180°C or less, and particularly preferably 170°C or less. Considering the stability and the heat resistance of the polyamide copolymer, the melting point of the polyamide copolymer is preferably 125°C or more, more preferably 130°C or more, further preferably 135°C or more, and particularly preferably 140°C or more. However, in order to decrease the temperature for the formation in the fused deposition modeling 3D printer as possible to save the power consumption, the melting point of the polyamide copolymer may be less than 140°C. The melting point of the polyamide copolymer can be measured by the method as described in EXAMPLES described below.

The melt flow rate of the polyamide copolymer is preferably 10 g/10 min or more as measured by using a load of 5000 g at 200°C according to ISO 1133. When the melt flow rate of the polyamide copolymer is 10 g/10 min or more, the polyamide copolymer is stably melted, and thereby the discharging amount from the tip of the extrusion head becomes stable, and the interlayer adhesion becomes good. Therefore, the formability by the fused deposition modeling 3D printer becomes improved. The melt flow rate of the polyamide copolymer is more preferably 20 g/10 min or more, further preferably 30 g/10 min or more, and particularly preferably 40 g/10 min or more. Considering the shape retention of the formed article by the fused deposition modeling 3D printer, the melt flow rate of the polyamide copolymer is 95 g/10 min or less, more preferably 85 g/10 min or less, further preferably 75 g/10 min or less, and particularly preferably 65 g/10 min or less. However, in order to increase the interlayer adhesion as possible to improve the formability in the fused deposition modeling 3D printer, the melt flow rate of the polyamide copolymer may be more than 65 g/10 min. The melt flow rate of the polyamide copolymer as measured by using a load of 5000 g at 200°C can be measured by the method as described in EXAMPLES described below.

The bending elastic modulus of the polyamide copolymer is preferably 1000 MPa or less as measured at 23°C and 50 % RH according to ISO 178. The bending elastic modulus of the polyamide copolymer is more preferably 800 MPa or less, further preferably 600 MPa or less, and particularly preferably 400 MPa or less. Considering the strength of the formed article by the fused deposition modeling 3D printer, the bending elastic modulus of the polyamide copolymer is preferably 50 MPa or more, more preferably 100 MPa or more, further preferably 150 MPa or more, and particularly preferably 200 MPa or more. However, in order that the formed article has higher flexibility, the bending elastic modulus of the polyamide copolymer may be less than 100 MPa. The bending elastic modulus of the polyamide copolymer can be measured by the method as described in EXAMPLES described below.

In terms of the mechanical properties and the discoloration of the formed article by the fused deposition modeling 3D printer, the water absorption ratio of the polyamide copolymer is preferably 2.5 % or less. The water absorption ratio of the polyamide copolymer is preferably 2.0 % or less, more preferably 1.5 % or less, and particularly preferably 1.0 % or less. The water absorption ratio of the polyamide copolymer may be 0.3 % or more, or 0.6 % or more.

The polyamide copolymer means a polymer which has two or more types of repeating units and has an amide bond in at least part of the repeating units. Specific examples of the polyamide copolymer include caprolactam/hexamethylene diaminoadipic acid copolymer (polyamide 6/polyamide 66 copolymer), caprolactam/hexamethylene diaminoazelaic acid copolymer (polyamide 6/polyamide 69 copolymer), caprolactam/hexamethylene diamino sebacic acid copolymer (polyamide 6/polyamide 610 copolymer), caprolactam/hexamethylene diamino undecanoic acid copolymer (polyamide 6/polyamide 611 copolymer), caprolactam/hexamethylene diamino dodecanoic acid copolymer (polyamide 6/polyamide 612 copolymer), caprolactam/aminoundecanoic acid copolymer (polyamide 6/polyamide 11 copolymer), caprolactam/lauryllactam copolymer (polyamide 6/polyamide 12 copolymer), caprolactam/hexamethylene diaminoadipic acid/lauryllactam(polyamide 6/polyamide 66/polyamide 12 copolymer), caprolactam/hexamethylene diaminoadipic acid/hexamethylene diamino sebacic acid (polyamide 6/polyamide 66/polyamide 610 copolymer), caprolactam/hexamethylene diaminoadipic acid/hexamethylene diamino dodecanedicarboxylic acid (polyamide 6/polyamide 66/polyamide 612 copolymer), polyamide 92/polyamide 62 copolymer, polyamide 102/polyamide 62 copolymer, polyamide 122/polyamide 62 copolymer, caprolactam/polyisophorone adipamide copolymer (polyamide 6/IPD 6 copolymer), and polyamide elastomers. In terms of performing the effect of the present invention, polyamide 6/polyamide 12 copolymer, polyamide 6/polyamide 11 copolymer, polyamide 6/polyamide 66/polyamide 12 copolymer, and polyamide elastomers are preferable. Polyamide 6/polyamide 12 copolymer and polyamide elastomers are more preferable, and Polyamide elastomers are further preferable.

The polyamide elastomer has a hard segment and a soft segment in which the hard segment has a constituting unit of the polyamide. Preferably, the soft segment of the polyamide elastomer has a constituting unit of the polyether. Examples of the polyamide elastomer having the constituting unit of the polyether in the soft segment include polyether polyester polyamide elastomers in which the hard segment and the soft segment are bonded to each other via an ester bond; and polyether polyamide elastomers in which the hard segment and the soft segment are bonded to each other via an amide bond. In terms of performing the effect of the present invention, as well as an improved hydrolysis resistance and stabilized formability over a long period of time, polyether polyamide elastomers in which the hard segment and the soft segment are bonded to each other via an amide bond are preferable.

The polyamide constituting unit in the hard segment is preferably a constituting unit produced from a polyamide-forming monomer, which is at least one selected from the group consisting of nylon salts containing a diamine and a dicarboxylic acid, aminocarboxylic acid compounds represented by the following formula (A1), and lactam compounds represented by the following formula (A2).

$$H_2N\text{-}R^1\text{-}COOH \qquad (A1)$$

In the formula, $R^1$ represents a linking group containing a hydrocarbon chain.

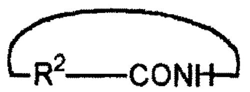

(A2)

In the formula, $R^2$ represents a linking group containing a hydrocarbon chain.

The hard segment can also be derived from the polyamide having carboxyl groups at both ends. The hard segment is also a segment which has a polyamide constituting unit and at least one dicarboxylic acid (C) selected from the group consisting of aliphatic dicarboxylic acids, alicyclic dicarboxylic acids, and aromatic dicarboxylic acids.
[Chemical Formula 7]

$$HOOC\text{-}(R^3)_m\text{-}COOH \qquad (c)$$

In the formula, $R^3$ represents a linking group containing a hydrocarbon chain, and m is 0 or 1.

Examples of the aminocarboxylic acid compound (A1) include aliphatic ω-aminocarboxylic acids having a carbon number of 5 to 20, such as 6-aminocaproic acid, 7-aminoheptanoic acid, 8-aminooctanoic acid, 10-aminocapric acid, 11-aminoundecanoic acid, and 12-aminododecanoic acid.

Examples of the diamine include diamine compounds, for example, aliphatic diamines having a carbon number of 2 to 20, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexan-1,6-diamine, 2,4,4-trimethylhexan-1,6-diamine, and 3-methylpentan-1,5-diamine.

Examples of the lactam compound (A2) include aliphatic lactams having a carbon number of 5 to 20, such as ε-caprolactam, ω-enantholactam, ω-undecalactam, ω-lauryllactam, and 2-pyrrolidone.

Among them, in terms of the dimension stability due to low water absorption, chemical resistance, and mechanical properties, ω-lauryllactam, 11-aminoundecanoic acid and 12-aminododecanoic acid are preferable.

As the dicarboxylic acid compound (C), at least one dicarboxylic acid selected from aliphatic, an alicyclic and

aromatic dicarboxylic acid, or a derivative thereof can be used.

Specific examples of the dicarboxylic acid include linear aliphatic dicarboxylic acids having a carbon number of 2 to 25, such as oxalic acid, succinic acid, glutaric acid, adipic acid, pimelic acid, suberic acid, azelaic acid, sebacic acid, and dodecanedioic acid, or aliphatic dicarboxylic acids such as dimerized aliphatic dicarboxylic acids (dimer acids) having a carbon number of 14 to 48 and hydrogenated compounds thereof (hydrogenated dimer acids), in which the aliphatic dicarboxylic acid is obtained by dimerizing an unsaturated fatty acid which is obtained by the fractional distillation of triglycerides; alicyclic dicarboxylic acids such as 1,4-cyclohexanedicarboxylic acid; and aromatic dicarboxylic acids such as terephthalic acid and isophthalic acid. As the dimer acid and hydrogenated dimer acid, "PRIPOL 1004", "PRIPOL 1006", "PRIPOL 1009", "PRIPOL 1013", or the like manufactured from Uniqema may be used.

The polyamide having carboxyl groups at both ends can be obtained by the ring-opening polymerization or the polycondensation of the polyamide constituting unit in the presence of the dicarboxylic acid by a conventional method. The dicarboxylic acid for the hard segment can be used as a molecular weight modifier.

The number average molecular weight of the hard segment is preferably 300 to 15000, and more preferably 300 to 6000 in terms of the flexibility and the formability.

The soft segment is preferably polyether, and example of the soft segment include polyethylene glycols, polypropylene glycols, polytetramethylene ether glycols, and XYX-type triblock polyethers represented by the following formula (B). These may be used alone or in combination with two or more kinds. For example, the polyether diamine obtained by reacting ammonia with the end of polyether may be used. The number average molecular weight of the soft segment is preferably 200 to 6000, and more preferably 650 to 2000.

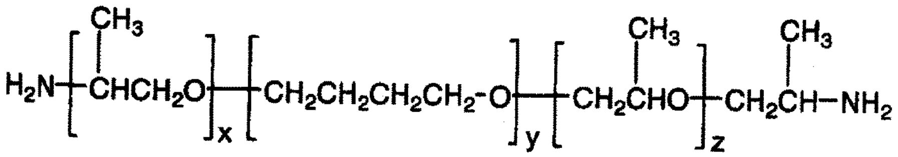

(B)

In the formula, x represents a number of 1 to 20, y represents a number of 4 to 50, and z represents a number of 1 to 20.

In the formula (B), x and z are each independently preferably an integer of 1 to 18, more preferably an integer of 1 to 16, further preferably an integer of 1 to 14, and particularly preferably an integer of 1 to 12. In the formula (B), y is preferably an integer of 5 to 45, more preferably an integer of 6 to 40, further preferably an integer of 7 to 35, and particularly preferably an integer of 8 to 30.

Examples of the combination of the hard segment and the soft segment include combinations of the above-mentioned hard segment and the above-mentioned soft segment. Among them, the combination of ring-opening polymerization product of lauryllactam/polyethylene glycol, the combination of ring-opening polymerization product of lauryllactam/polypropylene glycol, the combination of ring-opening polymerization product of lauryllactam/polytetramethylene ether glycol, and the combination of ring-opening polymerization product of lauryllactam/XYX-type triblock polyether are preferable. The combination of ring-opening polymerization product of laurryllactam/XYX-type triblock polyether is particularly preferred.

As for the percentage (weight ratio) of the hard segment to the soft segment, the ratio of hard segment/soft segment is preferably 95/5 to 20/80. When the percentage is within the range, the breed out of the formed article is easily prevented, and the sufficient flexibility is easily established. The hard segment/soft segment (weight ratio) is more preferably 95/5 to 25/75, and particularly preferably 50/50 to 30/70.

If the hard segment/soft segment (weight ratio) is less than the range, the crystallinity of the polyamide component may be decreased, and mechanical properties such as the strength and the modulus may be decreased, which is not preferred. If the hard segment/soft segment (weight ratio) is more than the range, performing functions and properties as the elastomer such as the toughness and the rubber elasticity and flexibility becomes difficult, which may be not preferred.

Commercially available examples of the polyamide elastomer include trade name "DIAMID (registered trade mark) E1947", "DIAMID (registered trade mark) E47", "DIAMID (registered trade mark) E47H", "DIAMID (registered trade mark) E55", "DIAMID (registered trade mark) E55H", "DIAMID (registered trade mark) E62", "DIAMID (registered trade mark) E62H", "DIAMID (registered trade mark) E73K2", "DIAMID (registered trade mark) E75K2", "DIAMID (registered trade mark) EX9200", "DIAMID (registered trade mark) MSP-S", "DIAMID (registered trade mark) X4442W2", "DIAMID (registered trade mark) ZE7000", "DIAMID (registered trade mark) ZE7200", "VESTAMID (registered trade mark) E47-S1", "VESTAMID (registered trade mark) E47-S4", "VESTAMID (registered trade mark) E55-S4", "VESTAMID (registered trade mark) E58-S4", "VESTAMID (registered trade mark) E62-S1 ", "VESTAMID (registered trade mark) E62-S4", "VESTAMID (registered trade mark) EX9200", and "VESTAMID (registered trade mark) EX9202" manufactured from Daicel-Evonik Ltd.; trade name "Pebax" series manufactured from ARKEMA; trade name "GRILFLEX (registered trade mark) EBG", "GRILFLEX (registered trade mark) ELG", and "GRILON (registered trade mark) ELX" manufactured

from EMS-CHEMIE (Japan) Ltd.; and trade name "UBESTA XPA (registered trade mark)" series manufactured from UBE INDUSTRIES, LTD.

Among them, in terms of performing the effect of the present invention and having an improved hydrolysis resistance, trade name "UBESTA XPA (registered trade mark)" series manufactured from UBE INDUSTRIES,LTD. are preferred.

The polyamide elastomer may be used alone, or in combination of two or more.

In the polyether polyamide elastomer, it is preferable that the hardness (shore D) of the polyether polyamide elastomer is within a range of 15 to 70, and that the elastic recovery ratio of elongation (%) and the hardness (shore D) has a relationship of the following equation. When the elastic recovery ratio of elongation (%) and the hardness (shore D) has a relationship of the following equation, the characteristic properties as the elastomer based on the rubber elasticity such as the repulsion elasticity and the flex resistance are especially improved.

$$Y > (-0.0042X^2 + 0.175X + Z)$$

In the equation, X represents the hardness (shore D), and Y represents the elastic recovery ratio of elongation (%). In the equation, Z is preferably 91.5, further preferably 92, furthermore preferably 92.5, and particularly preferably 93.

The hardness (shore D) of the polyether polyamide elastomer is preferably within a range of 15 to 70, further preferably within a range of 18 to 70, furthermore preferably within a range of 20 to 70, and particularly preferably within a range of 25 to 70.

The stress relaxation (t0.9) is preferably 2 seconds or more, further preferably 2.2 seconds or more, furthermore preferably 2.5 seconds or more, and particularly preferably 2.8 seconds or more. When the stress relaxation is within the range, the elastomer having an especially improved rubber elasticity can be obtained.

The elastic recovery ratio of elongation of the polyether polyamide elastomer is preferably within a range of 86 to 100%, further preferably within a range of 87 to 100%, and particularly preferably within a range of 88 to 100%. When the elastic recovery ratio of elongation is within the range, the elastomer having an especially improved recovery elasticity and repulsion elasticity can be obtained.

The yield strength of the polyether polyamide elastomer is preferably within a range of 3 to 25 MPa, further preferably within a range of 3 to 22 MPa, furthermore preferably within a range of 3 to 20 MPa, and particularly preferably within a range of 3 to 18 MPa. When the yield strength is within the range, the elastomer having an especially improved toughness and rubber elasticity can be obtained.

The stretch at break of the polyether polyamide elastomer is preferably 300% or more, and particularly preferably 600% or more. If the stretch at break is less than the range, performing properties as the elastomer such as the toughness and the rubber elasticity becomes difficult, which may be not preferred.

The haze of the polyether polyamide elastomer is preferably 35 or less, further preferably 34 or less, furthermore preferably 32 or less, and particularly preferably 30 or less. When the haze is lower than the values, the elastomer having an improved transparency can be obtained.

The bending number at the occurrence of the crack of the polyether polyamide elastomer in the bending test by De Mattia method is preferably 50,000 or more, further preferably 100,000 or more, furthermore preferably 110,000 or more, and particularly preferably 120,000 or more. When the bending number at the occurrence of the crack of the polyether polyamide elastomer is within the range, it is preferable because the elastomer has an improved bending fatigue resistance.

The bending elastic modulus of the polyether polyamide elastomer is preferably 0.8 to 15 MPa, further preferably from 1.0 to 13 MPa, furthermore preferably from 1.1 to 10 MPa, and particularly preferably from 1.2 to 9 MPa. When the bending elastic modulus of the polyether polyamide elastomer is within the range, it is preferable because the elastomer having a good balance between the toughness such as bending elastic modulus and the rubber elasticity is obtained.

It is preferable that the polyether polyamide elastomer is not broken in the measurement of Izod notch impact strength at 23°C (abbreviated to as NB) because the elastomer has an improved impact resistance.

The deflection temperature under load of the polyether polyamide elastomer is preferably 50°C or more. If the temperature is less than the range, it is not preferred because the material is easily deformed during usage.

As example of the method for producing the polyether polyamide elastomer, the method can be used in which the method has a step of melting and polymerizing three components of a polyamide-forming monomer, an XYX-type triblock polyether diamine and a dicarboxylic acid under a high pressure and/or an ordinary pressure, and optionally a step of further melting and polymerizing under a reduced pressure. Further, the method can be used in which the method has a step of simultaneously melting and polymerizing three components of a polyamide-forming monomer, an XYX-type triblock polyether diamine and a dicarboxylic acid under a high pressure and/or an ordinary pressure, and optionally a step of further melting and polymerizing under a reduced pressure. The method can be also used in which the method

has a step of firstly polymerizing a polyamide-forming monomer and a dicarboxylic acid, and a step of thereafter polymerizing an XYX-type triblock polyether diamine.

In the production of the polyether polyamide elastomer, the method for charging raw materials is not particularly limited. However, the ratio of the polyamide-forming monomer with respect to the polyamide-forming monomer and the XYX-type triblock polyether diamine is preferably 20 to 95 wt%, more preferably 25 to 95 wt%, and particularly preferably 30 to 50 wt%, and the ratio of the XYX-type triblock polyether diamine is preferably 5 to 80 wt%, more preferably 5 to 75 wt%, and particularly preferably 50 to 70 wt%. Among the raw materials, the XYX-type triblock polyether diamine and the dicarboxylic acid are preferably charged so that the amino group of the XYX-type triblock polyether diamine and the carboxyl group of the dicarboxylic acid are almost equimolar.

The polyether polyamide elastomer can be produced at a preferable polymerization temperature of 150 to 300°C, at a more preferable polymerization temperature of 160 to 280°C, or at a particularly preferable temperature of 180 to 250°C. If the polymerization temperature is lower than the temperature as described above, the polymerization reaction proceeds slowly. If the polymerization temperature is more than the temperature as described above, the thermolysis tends to occur, and the polymer having good properties may not be obtained.

When ω-aminocarboxylic acid is used as the polyamide-forming monomer, the polyether polyamide elastomer can be produced by the method which has a step of melting and polymerizing under an ordinary pressure, or by the method which has a step of melting and polymerizing under an ordinary pressure and a step pf thereafter melting and polymerizing under a reduced pressure.

On the other hand, when a lactam, or a compound synthesized from a diamine and a dicarboxylic acid and/or a salt thereof is used as the polyamide-forming monomer, the polyether polyamide elastomer can be produced by the method which has a step of melting and polymerizing under a high pressure of 0.1 to 5 MPa in the presence of a suitable amount of water and a step of thereafter melting and polymerizing under an ordinary pressure and/or melting and a reduced pressure.

The polyether polyamide elastomer can be typically produced at a polymerization time of 0.5 to 30 hours. If the polymerization time is shorter than the range, the molecular weight is not increased sufficiently. If the polymerization time is longer than the range, the coloration due to the thermolysis occurs. In both cases, the polyether polyamide elastomer having desired properties may not be obtained.

The polyether polyamide elastomer can be produced in a batch process or a continuous process. A batch-type reactor, a one reactor-type or multi reactor-type continuous reactor, and a tubular continuous reactor can be used alone, or in combination as needed.

The relative viscosity (ηr) of the polyether polyamide elastomer is preferably within a range of 1.2 to 3.5 (in 0.5 weight/volume% meta-cresol solution , 25°C).

In the production of the polyether polyamide elastomer, a monoamine or a diamine such as laurylamine, stearylamine, hexamethylenediamine, and meta-xylylenediamine; or a monocarboxylic acids or a dicarboxylic acid such as acetic acid, benzoic acid, stearic acid, adipic acid, sebacic acid, and dodecanedioic acid can be added in order to adjust the molecular weight and to stabilize the melt viscosity during formation and processing, if needed. The used amounts of these are preferably added so that the relative viscosity of the finally resulting elastomer is within a range of 1.2 to 3.5 (in 0.5 weight/volume% meta-cresol solution, 25°C).

In the production of the polyether polyamide elastomer, the added amount of the monoamine, the diamine, the monocarboxylic acid, or the dicarboxylic acid is preferably within the range so that the properties of the resulting polyether polyamide elastomer are not disturbed.

In the production of the polyether polyamide elastomer, phosphoric acid, pyrophosphoric acid, polyphosphoric acid, or the like can be added as the catalyst. An inorganic phosphorus compound such as phosphorous acid, phosphinic acid, the alkaline metal salt thereof, and alkaline earth metal salt thereof can be added for the effect of the catalyst and the heat resistant agent. The added amount is typically 50 to 3000 ppm based on the raw materials charged.

The polyether polyamide elastomer has low water absorption, improved melt formability, improved processability for formation, improved toughness, improved bending fatigue resistance, improved repulsion elasticity, low specific gravity, improved flexibility at low temperature, improved impact resistance at low temperature, improved elastic recovery of elongation, improved sound deadening properties, and improved rubber properties and transparency.

The filament for used deposition modeling 3D printer can be obtained by forming the material for fused deposition modeling 3D printer into a monofilament shape. Forming into the monofilament shape can be performed by extrusion molding, for example. Examples of the form of the monofilament include the monofilaments simply formed as the monofilament, twisted monofilaments formed by bundling monofilaments, and the monofilaments formed by bundling and melting multifilaments, and any monofilament can be used.

A winding body can be obtained by winding the resulting filaments for fused deposition modeling 3D printer. Further, a cartridge to be mounted to fused deposition modeling 3D printer can be obtained by placing the winding body in the cartridge.

As described above, according to the present invention, a material for fused deposition modeling 3D printer

having an improved formability, and a filament for fused deposition modeling 3D printer used the same can be provided. By using the filament for fused deposition modeling 3D printer using the material for fused deposition modeling 3D printer of the present invention, an advanced safety counterplan is not required. Further, by using the filament for fused deposition modeling 3D printer using the material for fused deposition modeling 3D printer, the interlayer adhesion becomes good, and the formability becomes improved and the impact resistance becomes improved to obtain the formed article which is durable if it is dropped.

The material for fused deposition modeling 3D printer of the present invention and the filament for fused deposition modeling 3D printer used the same can be used for building the formed article and the supporting body. However, it is preferably used for building the formed article because they have improved formability, interlayer adhesion, and impact resistance.

The formed article formed by the filament for fused deposition modeling 3D printer of the present invention can be used in various technical fields of applications including medical parts, automobile parts, and household articles. For example, the formed article can be used for shoe soles, prosthetic legs, toys, miniatures for infants, and miniatures for handicrafts in schools.

If the formed article is dropped, or if an object is dropped on the formed article, the formed article is delaminated or damaged, and renders unusable. Example of the method for evaluating the condition quantitatively include a method for confirming the formability and the durability of the formed article by performing Charpy impact test according to ISO 179 and bending test according to ISO 178. Specifically, the evaluation can be carried out by confirming the occurrence of the delamination, the occurrence of the crack or fissure, and the degree of the plastic deformation on the formed sample after these tests.

It is preferable that the formed sample produced from the filament for fused deposition modeling 3D printer of the present invention is not delaminated in the Charpy impact test according to ISO 179 and bending test according to ISO 178. When the formed sample is not delaminated in the Charpy impact test and the bending test, the interlayer adhesion becomes good, and therefore the formability by the fused deposition modeling 3D printer becomes improved.

In the Charpy impact test and the bending test, it is preferable that the fissure is not created in the formed sample. It is more preferable that the crack is not also created in the formed sample. When the fissure is not created in the formed sample in the Charpy impact test and the bending test, the impact resistance becomes improved to obtain the formed article which is durable if it is dropped. When the crack is not also created in the formed sample, the impact resistance becomes further improved to obtain the formed article which is further durable if it is dropped.

Further, in the Charpy impact test and the bending test, it is preferable that the plastic deformation is not created in the formed sample. When the plastic deformation is not created in the formed sample in the Charpy impact test and the bending test, the impact resistance becomes improved to obtain the formed article which is durable if it is dropped. As for the degree of the plastic deformation of the formed article after the Charpy impact test and the bending test, the bending degree is preferably less than 45 degrees, more preferably less than 25 degrees, and further preferably less than 5 degrees.

## EXAMPLES

Materials as described in TABLE 1 ("PA" is an abbreviation for polyamide) were prepared as the Examples and Comparative Examples of the present invention. Each material was evaluated as follows. The results are shown in TABLES 2 and 3. Note that PAE1 to PAE4 used in Examples 1 to 4 are a polyether polyamide elastomer produced by the method as described below.

<Melting point>

The melting point of each material was measured according to ISO 11357-3.

<MFR>

The MFR of each material was measured by using an orifice having a nozzle diameter of 2.0 mm and a length of 8.0 mm under a load of 5000 g at 200°C according to ISO 1133.

<Bending elastic modulus>

Each material was injection-molded in a condition that the forming temperature is set to 40°C higher than the melting point and the mold temperature is set to 40°C to obtain a plate having 10 mm x 4 mm x 80 mm. After conditioning the humidity of the plate sufficiently by keeping it at 23°C and 50%RH for about 3 days, the bending elastic modulus was measured at 23°C and 50%RH according to the procedure of ISO 178.

<Water absorption ratio>

Using each material, the forming temperature is set to 40°C higher than the melting point in a single screw extruder, and the melted resin is feeded to a die head. the melted resin is extruded through a nozzle having a diameter of 3 mm. The take-over speed is set to 10 m/min, the temperature of the cooling water bath is set to 15°C, and then the unstretched monofilament having a diameter of 2.0 mm was molded. The resulting monofilament was kept at 23°C and 50%RH for 30 days. After 30 days, the water absorption ratio of the monofilament was measured by Karl Fischer method.

<Formability>

The formation by each material was performed by the similar procedure as the measurement of MFR. Specifically, a melt flow index tester was filled with each material, and degassed sufficiently. After that, a stage was mounted at a position of 50 mm from the nozzle. The melted resin was laminated while moving the stage so as to obtain a laminate having a length of about 50 mm and a height of about 10 mm. At this procedure, the height of the stage was adjusted so that the adhesive surface to be laminated is always at a position of 50 mm lower than the nozzle. The resulting lamintate was then pulled with a hand, and it is confirmed whether it can be delaminated between the layer or not. For the evaluation of the formability, the state in which the layers are melted and sticked tightly is considered as "excellent" (◎), the state in which the layers are sticked tightly and are not delaminated by pulling with a hand is considered as "good" (○) and the state in which the layers are insufficiently sticked and are delaminated by pulling with a hand is considered as "bad" (×).

<Long term forming stability>

The extrusion molding was carried out in the similar condition as the measurement for the water absorption ratio. The monofilament after keeping it for 30 days was cut into pieces having a length of about 3 mm, and about 5 g of the pieces was charged in a barrel in a melt flow indexer. When a piston was inserted, and the resin was extruded through the nozzle with a load of 5000 g, it is visually confirmed whether the fuming and the foaming occurred or not. For the evaluation of the long term forming stability, the state in which the resin can be stably extruded without fuming and foaming was considered as "good" (○), and the state in which the extrusion of the resin was unstable because the fuming and the foaming occurred was considered as "bad" (×).

<Fracture test>

Each pellet material was dried at 90°C for 24 hours so that the water content of the pellet was 0.1% or less. The pellet was used and melted in a 30 mm single screw extruder. At the procedure, the temperature of the extruder was set to be 40°C higher than the melting point. The melted resin was extruded through the nozzle having a nozzle size of 6 mm, and was cooled and solidified in a water bath in which the temperature was set to 15°C. The take-over speed was set to 35 m/min, and the discharging amount was adjusted by a gear pump so that the diameter of the monofilament was 1.75 mm to obtain a monofilament for 3D printer. The resulting monofilament was charged in the 3D printer (manufactured from MUTOH INDUSTRIES LTD., trade Name: Value3D MagiX MF-2200D). The height of one layer is set to be 0.5 mm, and the filament width is set to be 1 mm, and the monofilament was laminated as a sample for the bending test (according to ISO 179) to obtain a formed sample having a size of 80 mm x 10 mm x 4 mm (8 layers).

The resulting formed sample was measured for Charpy impact test according to ISO 179 and bending test according to ISO 178, and the damage states (the occurrence of delamination, the occurrence of crack or fissure, and the degree of plastic deformation) were confirmed. For the occurrence of the delamination, the state in which there was no delamination was clarified as "○", and the state in which there was a delamination was clarified as "×". For the occurrence of the crack or fissure, the state in which there was neither crack nor fissure was clarified as "○", the state in which there was crack but there was no fissure was clarified as "Δ" , and the state in which there was fissure (one layer was completely separated into two or more pieces.) was clarified as "×". For the degree of the plastic deformation, the state in which the plastic deformation of the formed sample did not almost occur (the bending angle was less than 5 degrees) was considered as "○", the state in which the plastic deformation of the formed sample slightly occur (the bending angle was 5 degrees or more and less than 45 degrees) was considered as "Δ", and the state in which the plastic deformation of the formed sample remarkably occur (the bending angle was 45 degrees or more) was considered as "×". Examples of the formed sample having each state in the occurrence of the delamination, in the occurrence of the crack or fissure, and in the degree of the plastic deformation are shown TABLE 4.

(Production of PAE1)

To a pressure vessel having a volume of 70 L equipped with an agitator, a thermometer, a torque meter, a manometer, a nitrogen gas inlet, a pressure regulator, and a polymer outlet were added 6.30 kg of 12-aminododecanoic acid (manufactured from UBE INDUSTRIES,LTD.), 1.70 kg of adipic acid (manufactured from Asahi-Kasei Chemicals Corporation), 12.00 kg of an XYX-type triblock polyether diamine (manufactured from Huntsman Corporation, trade Name: ELASTAMINE RT-1000), 0.06 kg of a hindered phenol-based antioxidant (manufactured from BASF Japan, trade name: Irganox 245), and 0.03 kg of sodium hypophosphite (manufactured from Taihei Chemical Industrial Co., Ltd.). After the replacement by nitrogen in the vessel sufficiently, the temperature was increased from room temperature to 230°C for 1 hour with supplying nitrogen gas at 200 L/hour and adjusting the pressure in the vessel to 0.05 MPa, and then the mixture was polymerized at 230°C with keeping the pressure in the vessel at 0.05 MPa.

The ampere value of the agitation power (agitating current value) was reported over time. When the ampere value of the agitation power was increased by 0.2 A from the value at the start of the polymerization, the polymerization was considered to be completed. After the completion of the polymerization, the agitation was stopped. The melted colorless and transparent polymer was discharged from the polymer outlet, and cooled with water, pelletized to obtain a pellet.

(Production of PAE2)

To a pressure vessel having a volume of 70 L equipped with an agitator, a thermometer, a torque meter, a manometer, a nitrogen gas inlet, a pressure regulator, and a polymer outlet were added 8.00 kg of 12-aminododecanoic acid (manufactured from UBE INDUSTRIES,LTD.), 1.49 kg of adipic acid (manufactured from Asahi-Kasei Chemicals Corporation), 10.51 kg of an XYX-type triblock polyether diamine (manufactured from Huntsman Corporation, trade Name: ELASTAMINE RT-1000), 0.06 kg of a hindered phenol-based antioxidant (manufactured from BASF Japan, trade name: Irganox 245), and 0.03 kg of sodium hypophosphite (manufactured from Taihei Chemical Industrial Co., Ltd.). After the replacement by nitrogen in the vessel sufficiently, the temperature was increased from room temperature to 230°C for 1 hour with supplying nitrogen gas at 200 L/hour and adjusting the pressure in the vessel to 0.05 MPa, and then the mixture was polymerized at 230°C with keeping the pressure in the vessel at 0.05 MPa.

The ampere value of the agitation power (agitating current value) was reported over time. When the ampere value of the agitation power was increased by 0.2 A from the value at the start of the polymerization, the polymerization was considered to be completed. After completion of the polymerization, the agitation was stopped. The melted colorless and transparent polymer was discharged from the polymer outlet, and cooled with water, pelletized to obtain a pellet.

(Production of PAE3)

To a pressure vessel having a volume of 70 L equipped with an agitator, a thermometer, a torque meter, a manometer, a nitrogen gas inlet, a pressure regulator, and a polymer outlet were added 14.00 kg of 12-aminododecanoic acid (manufactured from UBE INDUSTRIES, LTD.), 0.74 kg of adipic acid (manufactured from Asahi-Kasei Chemicals Corporation), 5.26 kg of an XYX-type triblock polyether diamine (manufactured from Huntsman Corporation, trade Name: ELASTAMINE RT-1000), 0.06 kg of a hindered phenol-based antioxidant (manufactured from BASF Japan, trade name: Irganox 245), and 0.03 kg of sodium hypophosphite (manufactured from Taihei Chemical Industrial Co., Ltd.). After the replacement by nitrogen in the vessel sufficiently, the temperature was increased from room temperature to 230°C for 1 hour with supplying nitrogen gas at 200 L/hour and adjusting the pressure in the vessel to 0.05 MPa, and then the mixture was polymerized at 230°C with keeping the pressure in the vessel at 0.05 MPa.

The ampere value of the agitation power (agitating current value) was reported over time. When the ampere value of the agitation power was increased by 0.2 A from the value at the start of the polymerization, the polymerization was considered to be completed. After the completion of the polymerization, the agitation was stopped. The melted colorless and transparent polymer was discharged from the polymer outlet, and cooled with water, pelletized to obtain a pellet.

(Production of PAE4)

To a pressure vessel having a volume of 70 L equipped with an agitator, a thermometer, a torque meter, a manometer, a nitrogen gas inlet, a pressure regulator, and a polymer outlet were added 18.40 kg of 12-aminododecanoic acid (manufactured from UBE INDUSTRIES,LTD.), 0.20 kg of adipic acid (manufactured from Asahi-Kasei Chemicals Corporation), 1.40 kg of an XYX-type triblock polyether diamine (manufactured from Huntsman Corporation, trade Name: ELASTAMINE RT-1000), 0.06 kg of a hindered phenol-based antioxidant (manufactured from BASF Japan, trade name: Irganox 245), and 0.02 kg of sodium hypophosphite (manufactured from Taihei Chemical Industrial Co., Ltd.). After the

replacement by nitrogen into the vessel sufficiently, the temperature was increased from room temperature to 230°C for 1 hour with supplying nitrogen gas at 200 L/hour and adjusting the pressure in the vessel to 0.05 MPa, and then the mixture was polymerized at 230°C with keeping the pressure in the vessel at 0.05 MPa.

The ampere value of the agitation power (agitating current value) was reported over time. When the ampere value of the agitation power was increased by 0.2 A from the value at the start of the polymerization, the polymerization was considered to be completed. After the completion of the polymerization, the agitation was stopped. The melted colorless and transparent polymer was discharged from the polymer outlet, and cooled with water, pelletized to obtain a pellet.

(Production of PA1)

To a 70 L autoclave were added 16.0 kg of ε-caprolactam (manufactured from UBE INDUSTRIES,LTD.), 2.4 kg of AH salt aqueous solution (50 wt% solution in water) (manufactured from Asahi-Kasei Chemicals Corporation), 2.8 kg of 12-aminododecanoic acid (manufactured from UBE INDUSTRIES,LTD.), and 2.8 kg of distilled water. After the replacement by nitrogen in the polymerization tank, the tank was sealed and the temperature was increased to 180°C. After that, the temperature in the polymerization tank was increased to 240°C with agitating and adjusting the pressure in the tank to 17.5 $kgf/cm^2G$. After 2 hours after the polymerization temperature reached 240°C, the pressure in the polymerization tank was released to ordinary pressure for about 2 hours. After releasing the pressure, the polymerization was carried out under nitrogen flow for 1 hour, and then under a reduced pressure for 2 hours. After introducing nitrogen to recover the pressure to ordinary pressure, the agitator was stopped. The resulting polymer was discharged as a strand and pelletized. The polyamide pellet was added to boiled water and was stirred and washed for 12 hours to extract and remove unreacted monomers by extraction. After that, the polyamide pellet was dried under a reduced pressure at 100°C for 24 hours.

TABLE 1

| | Type | Trade Name | manufacturer |
|---|---|---|---|
| Ex. 1 | polyether polyamide elastomer | PAE1 | UBE INDUSTRIES, LTD. |
| Ex. 2 | | PAE2 | UBE INDUSTRIES, LTD. |
| Ex. 3 | | PAE3 | UBE INDUSTRIES, LTD. |
| Ex. 4 | | PAE4 | UBE INDUSTRIES, LTD. |
| Ex. 5 | PA6/PA12 copolymer | 7128B | UBE INDUSTRIES, LTD. |
| Ex. 6 | PA6/PA66 copolymer | 5033B | UBE INDUSTRIES, LTD. |
| Ex. 7 | PA6/PA66/PA12 copolymer | PA1 | UBE INDUSTRIES, LTD. |
| Ex. 8 | polyether polyester polyamide elastomer | PEBAX7233 | ARKEMA K.K. |
| Comp. Ex. 1 | PA12 | 3030U | UBE INDUSTRIES, LTD. |
| Comp. Ex. 2 | PA6 | 1011FB | UBE INDUSTRIES, LTD. |
| Comp. Ex. 3 | polyester elastomer | Hytrel 3046 | DU PONT-TORAY CO., LTD. |
| Comp. Ex. 4 | | Hytrel 7247 | DU PONT-TORAY CO., LTD. |

TABLE 2

| | Melting point (°C) | MFR (g/10 min) | Bending elastic modulus (MPa) | Water absorption ratio (%) | Formability | Long term forming stability |
|---|---|---|---|---|---|---|
| Ex. 1 | 126 | 85 | 50 | 0.9 | ◎ | ○ |
| Ex. 2 | 137 | 66 | 90 | 0.9 | ◎ | ○ |
| Ex. 3 | 164 | 32 | 240 | 0.9 | ◎ | ○ |
| Ex. 4 | 176 | 13 | 650 | 0.9 | ○ | ○ |
| Ex. 5 | 130 | 33 | 240 | 0.9 | ◎ | ○ |

(continued)

| | Melting point (°C) | MFR (g/10 min) | Bending elastic modulus (MPa) | Water absorption ratio (%) | Formability | Long term forming stability |
|---|---|---|---|---|---|---|
| Ex. 6 | 196 | Impossible to measure | 930 | 3.4 | ○ | × |
| Ex. 7 | 188 | Impossible to measure | 770 | 3.8 | ○ | × |
| Ex. 8 | 174 | 18 | 540 | 0.7 | ○ | ○ |
| Comp. Ex. 1 | 178 | 4 | 1400 | 0.9 | × | ○ |
| Comp. Ex. 2 | 220 | Impossible to measure | 1020 | 2.8 | × | × |
| Comp. Ex. 3 | 190 | Difficult to measure | 20 | unmeasured | × | × |
| Comp. Ex. 4 | 240 | Impossible to measure | 600 | unmeasured | × | × |

TABLE 3

| | Charpy impact test | | | Bending test | | |
|---|---|---|---|---|---|---|
| | delamination | crack, fissure | plastic deformation | delamination | crack, fissure | plastic deformation |
| Ex. 1 | ○ | ○ | ○ | ○ | ○ | ○ |
| Ex. 2 | ○ | ○ | ○ | ○ | ○ | ○ |
| Ex. 3 | ○ | ○ | ○ | ○ | ○ | ○ |
| Ex. 4 | ○ | ○ | ○ | ○ | ○ | Δ |
| Ex. 5 | ○ | ○ | ○ | ○ | ○ | ○ |
| Ex. 6 | ○ | Δ | × | ○ | ○ | × |
| Ex. 7 | ○ | ○ | Δ | ○ | Δ | × |
| Ex. 8 | unmeasured | | | unmeasured | | |
| Comp. Ex. 1 | × | ○ | × | × | ○ | × |
| Comp. Ex. 2 | × | × | × | × | × | × |
| Comp. Ex. 3 | unmeasured | | | unmeasured | | |
| Comp. Ex. 4 | unmeasured | | | unmeasured | | |

TABLE 4

| | delamination | crack, fissure | plastic deformation |
|---|---|---|---|
| ○ | 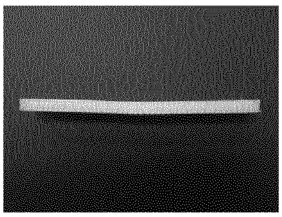 | 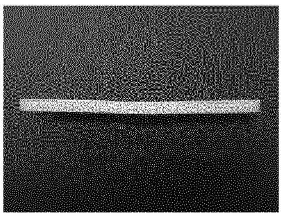 | 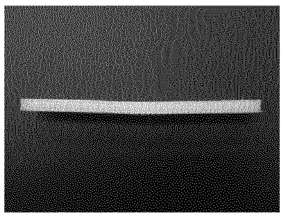 |

(continued)

| | delamination | crack, fissure | plastic deformation |
|---|---|---|---|
| Δ | - | 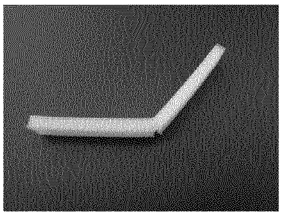 | 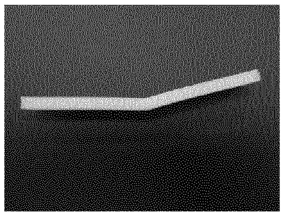 |
| × | 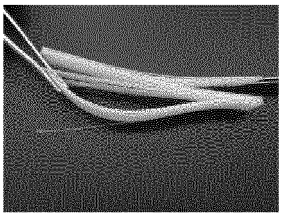 | 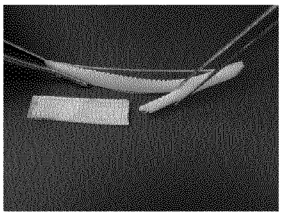 | 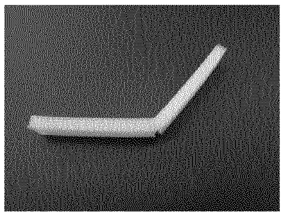 |

## Claims

1. A material for fused deposition modeling 3D printer, comprising a polyamide copolymer.

2. The material for fused deposition modeling 3D printer according to Claim 1, wherein the polyamide copolymer is a polyamide elastomer.

3. The material for fused deposition modeling 3D printer according to Claim 2, wherein the polyamide elastomer is a polyether polyamide elastomer.

4. The material for fused deposition modeling 3D printer according to Claim 3, wherein the polyether polyamide elastomer is obtained by polymerizing an amino carboxylic acid compound represented by the following formula (A1) and/or a lactam compound represented by the following formula (A2), a triblock polyether diamine compound represented by the following formula (B), and a dicarboxylic acid compound represented by the following formula (C).

$$H_2N\text{-}R^1\text{-}COOH \qquad (A1)$$

In the formula, $R^1$ represents a linking group containing a hydrocarbon chain.

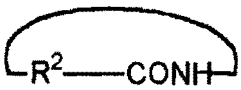 (A2)

In the formula, $R^2$ represents a linking group containing a hydrocarbon chain.

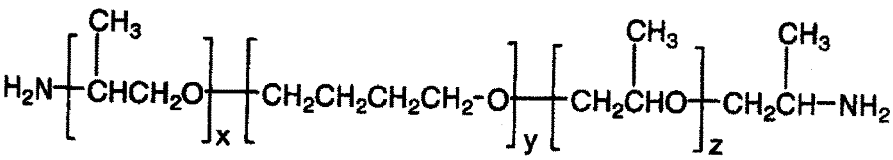 (B)

In the formula, x represents a number of 1 to 20, y represents a number of 4 to 50, and z represents a number of 1 to 20.

$$HOOC\text{-}(R^3)_m\text{-}COOH \qquad (c)$$

In the formula, $R^3$ represents a linking group containing a hydrocarbon chain, and m is 0 or 1.

5. The material for fused deposition modeling 3D printer according to any one of Claims 1 to 4, wherein the polyamide

copolymer has a melting point of 200°C or less.

6. The material for fused deposition modeling 3D printer according to any one of Claims 1 to 5, wherein the polyamide copolymer has a melt flow rate of 10 g/10 min or more as measured by using a load of 5000 g at 200°C according to ISO 1133.

7. The material for fused deposition modeling 3D printer according to any one of Claims 1 to 6, wherein the polyamide copolymer has a bending elastic modulus of 1000 MPa or less as measured at 23°C and 50%RH according to ISO 178.

8. A filament for fused deposition modeling 3D printer, comprising the material for fused deposition modeling 3D printer according to any one of Claims 1 to 7.

9. A winding body of the filament for fused deposition modeling 3D printer according to Claim 8.

10. A cartridge to be mounted to fused deposition modeling 3D printer, comprising the winding body according to Claim 9 placed in the cartridge.

**INTERNATIONAL SEARCH REPORT**

International application No. PCT/JP2017/020137

A. CLASSIFICATION OF SUBJECT MATTER
*B29C64/20*(2017.01)i, *B29C64/118*(2017.01)i, *B29C64/259*(2017.01)i, *B33Y70/00*(2015.01)i, *C08G69/00*(2006.01)i, *C08L77/00*(2006.01)i, *B29K77/00*(2006.01)n

According to International Patent Classification (IPC) or to both national classification and IPC

B. FIELDS SEARCHED

Minimum documentation searched (classification system followed by classification symbols)
B29C64/20, B29C64/118, B29C64/259, B33Y70/00, C08G69/00, C08L77/00, B29K77/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2014/081594 A1 (STRATASYS, INC.), 30 May 2014 (30.05.2014), paragraphs [0001], [0041] to [0181]<br>& JP 2016-505409 A & US 2014/0141166 A1<br>& CA 2891473 A1 & KR 10-2015-0091483 A<br>& CN 105163928 A & HK 1212654 A<br>& AU 2014354930 A | 1-2,5-10<br>3-4 |
| Y | WO 2009/057805 A1 (Ube Industries, Ltd.), 07 May 2009 (07.05.2009), page 6, line 14 to page 18, line 20; page 29, line 25 to page 45, the last line<br>& JP 5251883 B2 & TW 200936643 A | 3-4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 July 2017 (14.07.17) | 01 August 2017 (01.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016055637 A
- JP 2016088101 A